# EUROPÄISCHE PATENTSCHRIFT

(11) **EP 0 568 786 B1**
(45) Veröffentlichungstag und Bekanntmachung des Hinweises auf die Patenterteilung: **15.11.1995**
(21) Anmeldenummer: 93103531.5
(22) Anmeldetag: 05.03.1993
(51) Int. Cl.: B23B 51/00

(54) **Vorrichtung zur Herstellung von Bohrlöchern mit Hinterschneidung**
Drilling device for making holes with undercuttings
Dispositif de perçage pour faire des trous à chambrage

(30) Priorität: 05.05.1992 DE 4214343
(43) Veröffentlichungstag der Anmeldung: 10.11.1993
(73) Patentinhaber: fischerwerke Artur Fischer GmbH & Co. KG, D-72178 Waldachtal (DE)
(72) Erfinder: Bohnet, Hartmut, W-7244 Tumlingen 3/Waldacht (DE); Haug, Willi, W-7290 Freudenstadt Musbach (DE); Lind, Stefan, W-7244 Tumlingen 3/Waldachtalk (DE)

(56) Entgegenhaltungen:
- EP-A- 0 336 182
- EP-A- 0 484 647
- EP-A- 0 529 238
- DE-U- 9 104 326

## Beschreibung

Die Erfindung betrifft eine Vorrichtung zur Herstellung von Bohrlöchern mit Hinterschneidung, insbesondere in Fassadenplatten aus Keramik, Stein, Beton oder dgl.

Zur Herstellung von Bohrlöchern mit Hinterschneidung sind Vorrichtungen bekannt, die eine mit einer kalottenförmigen Mulde versehene Lagerbuchse aufweisen, in der ein mit einem Bund versehenes Bohrwerkzeug abgestützt und verschwenkbar gelagert ist. Durch Ausschwenken des Bohrwerkzeuges bei gleichzeitiger Rührbewegung wird von den am Bohrwerkzeug angeordneten Seitenschneiden im Bereich des Bohrlochgrundes eine Hinterschneidung ausgerieben, in die ein Spreizdübel mit aufspreizbarer Spreizhülse formschlüssig einsetzbar ist; siehe EP-A-529 238, die zum Stand der Technik gemäß Art. 54 (3) E.P.Ü. gehört.

Derartige Bohrlöcher mit Hinterschneidung lassen sich auch in Fassadenplatten oder dgl. einbringen, jedoch müssen dort die Hinterschneidungen sehr exakt ausgeführt werden, damit beim Einsetzen und Aufspreizen eines Spreizankers kein zu hoher Spreizdruck entsteht. Ein zu hoher Spreizdruck kann nämlich dazu führen, daß ein Teil der Fassadenplatte wegplatzt. Um eine exakte Hinterschneidung herzustellen, sind diese Vorrichtungen derart ausgestaltet, daß ein automatisches, maschinengesteuertes Ausschwenken ermöglicht wird. Ferner werden Bohrwerkzeuge verwendet, die einen mit Diamantsplitter bestückten Bohrkopf aufweisen. Beim Eintauchen des mit der Antriebsachse der Bohrmaschine fluchtend eingespannten Bohrwerkzeuges in die Fassadenplatte kommt die gesamte Stirnseite des kegelstumpfförmig ausgebildeten Bohrkopfes in Eingriff. Dies erfordert einen hohen Anpreßdruck des Bohrwerkzeuges, was aufgrund der geringeren Schnittgeschwindigkeit im Zentrum der Stirnseite des Bohrwerkzeuges zu einem vorzeitigen Stumpfwerden der Diamantsplitter führt. Damit wird die Standzeit des Bohrwerkzeuges erheblich herabgesetzt.

Der Erfindung liegt daher die Aufgabe zugrunde, eine durch automatisches und maschinengesteuertes Ausschwenken die Herstellung von Bohrlöchern mit Hinterschneidung ermöglichende Vorrichtung derart zu verbessern, daß lange Standzeiten der für das Bohren und Hinterschneiden verwendeten Bohrwerkzeuge erreicht werden.

Die Lösung dieser Aufgabe wird durch die im Anspruch 1 angegebenen Merkmale erreicht. Das mit der Antriebsachse der Bohrmaschine fluchtend verbundene Antriebsteil des Adapters überträgt das Drehmoment der Bohrmaschine auf den das Bohrwerkzeug aufnehmenden Werkzeughalter. Da die Mittelachse des Werkzeughalters und damit auch des Bohrwerkzeuges gegenüber der Mittelachse des Antriebsteiles abgewinkelt ist, taucht die Stirnseite des Bohrwerkzeuges einseitig in die zu bohrende Fassadenplatte ein. Der Mittelpunkt des Bohrwerkzeuges taumelt somit in einem Kreis um den Mittelpunkt der Bohrung. Durch die gleichzeitig schräg stehende Stirnseite des Bohrwerkzeuges ergibt sich ein flacher, kegelförmiger Bohrlochgrund und damit ein partieller Eingriff der Stirn- und Mantelfläche des Bohrwerkzeuges. Die Eingriffsfläche an der Stirnseite des Bohrwerkzeuges entspricht einem Kreisausschnitt, dessen Mittelpunktswinkel bei einer Winkelabweichung zwischen Antriebsteil und Werkzeughalter von ca. 2° etwa 60° beträgt. Damit werden beim Bohrvorgang etwa ein Sechstel der Stirnfläche des Bohrwerkzeuges in Anspruch genommen. Dies ermöglicht eine erhebliche Reduzierung des Anpreßdruckes bei gleichem Bohrvorschub und Nutzung von etwa einem Sechstel der Bohrerfläche. Ist diese Bohrerfläche abgenutzt, wird durch eine Verdrehung des Werkzeughalters gegenüber dem Antriebsteil eine noch ungenutzte Bohrerfläche in Eingriff gebracht. Dieser Verdrehvorgang wird solange angewandt, bis die gesamte Bohrerfläche gleichmäßig abgenutzt ist. Durch die Winkelstellung einerseits und der Verdrehmöglichkeit des Werkzeughalters gegenüber dem Antriebsteil andererseits wird somit das vier- bis sechsfache der Standzeit eines Bohrwerkzeuges erreicht, dessen Achse mit der Antriebsachse der Bohrmaschine fluchtet. Durch die gleichzeitige Reduzierung des Anpreßdruckes wird auch die Vorrichtung selbst weniger belastet.

Die Winkelabweichung zwischen den Mittelachsen des Werkzeughalters und des Antriebsteiles sollte zweckmäßigerweise zwischen 1,5° und 3° liegen. Damit beträgt die Eingriffsfläche des Bohrwerkzeuges an seiner Stirnseite etwa ein Viertel bis ein Siebtel der Gesamtfläche.

Die Winkelabweichung des Werkzeughalters gegenüber dem Antriebsteil wird dadurch erreicht, daß der Werkzeughalter in einer die Winkelabweichung aufweisenden Aufnahme des Antriebsteiles gehalten ist. Über ein Federelement, beispielsweise einer Tellerfeder oder einer Druckfeder, wird der Werkzeughalter in der Aufnahme reib- oder formschlüssig so verspannt, daß eine Drehmomentübertragung vom Antriebsteil auf den Werkzeughalter und damit das Bohrwerkzeug erreicht wird. Bei einer reibschlüssigen Verspannung ist das Weiterdrehen des Werkzeughalters unbestimmt und individuell möglich. Bei einer formschlüssigen Verspannung, beispielsweise durch eine Versahnung oder eine Kupplung, können durch die Anzahl der Zähne bzw. Kupplungsklauen ein bestimmtes Winkelmaß für die Weiterdrehung des Werkzeughalters vorgegeben werden. Bevorzugt wird eine Vierer- oder Sechserteilung, die je nach Winkelabweichung eine optimale Ausnutzung der Bohrerflächen ermöglicht.

Die Erfindung wird nachfolgend anhand in der Zeichnung dargestellter Ausführungsbeipiele nähers erläutert.

Es zeigen:

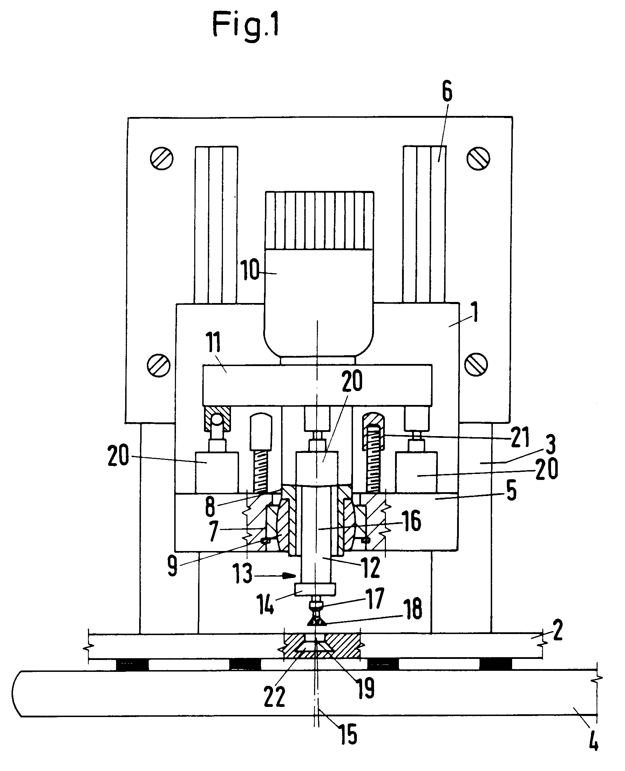

- Figur 1: den Gesamtaufbau der Vorrichtung in einer Frontansicht,
- Figur 2: den zweigeteilten Adapter mit einer reibschlüssigen Verspannung zwischen Werkzeughalter und Antriebsteil und
- Figur 3: den Adapter mit einer formschlüssigen Verspannung des Werkzeughalters und Antriebsteiles.

Die Vorrichtung 1 zur Herstellung von Bohrlöchern mit Hinterschneidung in Fassadenplanen 2 ist in einem Ständer 3 integriert, der eine Auflage 4 - gegebenenfalls mit Spanneinrichtung - für die Fassadenplane 2 aufweist. Für die Vertikalbewegung der Vorrichtung 1 sind an der Halterung 5 zwei Führungsschienen angeordnet, die in am Ständer 3 befestigte Führungsprofile 6 eingreifen.

In der Halterung 5 befindet sich das Schwenklager, das durch eine Lagerbuchse 7 und einem auf der Führungshülse 8 angeordneten kugelförmigen Bund 9 gebildet ist. Die Führungshülse 8 ist fest mit der Bohrmaschine 10 und der kreisförmigen Taumelscheibe 11 verbunden. Im Bohrfutter der Bohrmaschine 10 ist das Antriebsteil 12 des Adapters 13 eingespannt. Auf der Stirnseite des Antriebsteiles 12 ist ein Werkzeughalter 14 aufgesetzt, dessen Mittelachse 15 gegenüber der Mittelachse 16 des Antriebsteiles 12 eine Winkelabweichung von ca. 2° aufweist. Auf den Werkzeughalter 14 ist das mit Diamantsplitter bestückte Bohrwerkzeug 17 aufgeschraubt, das einen kegelsstumpfförmigen Bohrkopf 18 besitzt. Zum Bohren des Bohrloches 19 in der Fassadenplatte 2 wird die Vorrichtung 1 bei waagrecht stehender Taumelscheibe und eingeschalteter Bohrmaschine über ein Zahnstangengetriebe, Hebel oder dgl. (nicht dargestellt) nach unten bewegt und das zylindrische Bohrloch erstellt. Nach Erreichen der eingestellten Bohrlochtiefe wird bei laufender Bohrmaschine die Taumelscheibe 11 durch Ansteuern und Betätigen eines Zylinders 20 soweit in Schräglage gebracht, bis die Taumelscheibe auf den diesem Zylinder gegenüberliegenden Anschlägen 21 aufsitzt. Dabei wird die Achse der Bohrmaschine und des Bohrwerkzeuges entgegengesetzt um den Mittelpunkt des Schwenklagers ausgelenkt. Durch die nacheinander gesteuerte Betätigung der kreisförmig um den Adapter angeordneten Zylinder 20 im oder gegen den Urzeigersinn entsteht die Taumelbewegung, die zur Ausreibung der Hinterschneidung 22 des Bohrloches 19 führt. Nach ein oder zwei Umläufen wird die Taumelscheibe wieder in die waagrechte Lage gebracht und das Bohrwerkzeug aus dem Bohrloch ausgefahren.

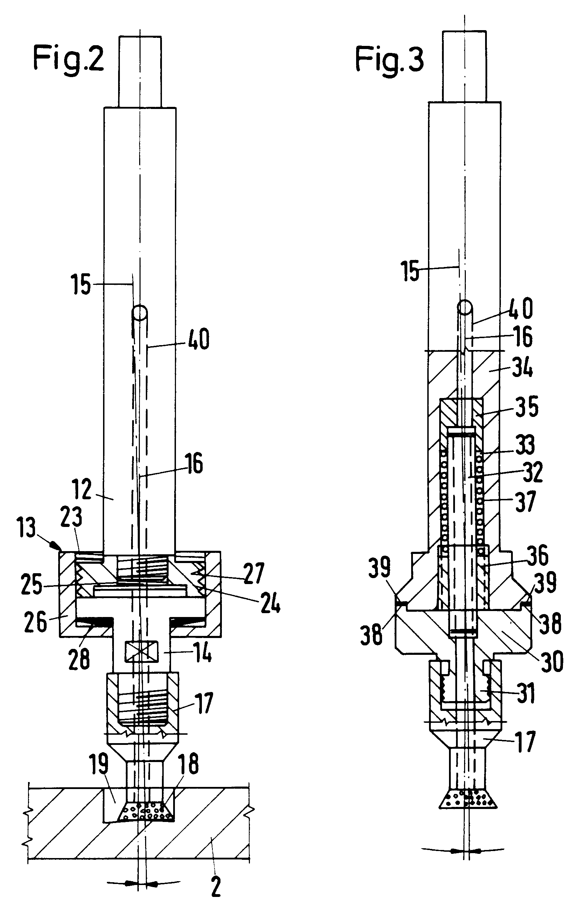

Bei dem in Figur 2 dargestellten Adpater 13 ist auf dem Gewindeabschnitt 23 des Antriebsteiles 12 ein Gewindestopfen 24 aufgeschraubt, der in das Innengewinde 25 der Überwurfmutter 26 eingeschraubt ist. Das Außengewinde 27 des Gewindestopfens 24 ist gegenüber dem Innengewinde 25 mit einer Winkelabweichung aufgebracht, so daß die Mittelachse 15 der auf den Gewindestopfen 24 aufgeschraubten Überwurfmutter 26 gegenüber der Mittelachse 16 des Antriebsteiles 12 um denselben Winkelbetrag abweicht. Die als Anschlagfläche für den Werkzeughalter 14 dienende Stirnseite des Gewindestopfens 24 steht in einem rechten Winkel zum Außengewinde 27 des Gewindestopfens. Damit nimmt auch der Werkzeughalter 14 gegenüber der Mittelachse 16 des Antriebsteiles 12 die durch das Außengewinde 27 des Gewindestopfens 24 vorgegebene Winkelposition ein. Das auf den Werkzeughalter 14 aufgeschraubte und zu diesem Zweck mit einem Innengewinde versehene Bohrwerkzeug 17 fluchtet mit der Mittelachse 15 des Werkzeughalters 14, so daß die Stirnseite des Bohrkopfes 18 entsprechend dieser Winkelstellung einseitig in die Fassadenplatte 2 eintaucht. Durch die Schrägstellung der Stirnseite des Bohrkopfes 18 und der gleichzeitigen Rotation des Bohrwerkzeuges wird der Bohrlochgrund mit einer flachen Kegelspitze ausgerieben, die einen kreisausschnittähnlichen Eingriff der Stirnseite des Bohrwerkzeuges bewirkt. Über die Tellerfeder 28 wird der Werkzeughalter 14 gegen die Anschlagfläche des Gewindestopfens 24 so stark verspannt, daß durch die dadurch entstehende Reibung die Drehmomentübertragung vom Antriebsteil 12 auf den Werkzeughalter 14 und damit auf das Bohrwerkzeug 17 erfolgt.

Ist die beanspruchte Eingriffsfläche des Bohrkopfes 18 abgenutzt, wird der Werkzeughalter 14 um ein Maß zwischen 60 bis 90° weitergedreht. Damit kommt eine ungenutzte Bohrerfläche zum Eingriff. Bei einer Winkelabweichung von ca. 2° ergibt sich eine kreisausschnittförmige Bearbeitungszone des Werkzeuges mit einem Mittelpunktswinkel von etwa 60°. Je nach Winkelstellung, die zwischen 1,5° und 3° vorzugsweise variiert werden kann, sind somit vier bis acht Bearbeitungsflächen des Bohrwerkzeuges in Eingriff zu bringen.

Bei dem in Figur 3 dargestellten Ausführungsbeispiel weist der Werkzeughalter 30 einen Gewindeabschnitt 31 auf, auf den das Bohrwerkzeug 17 aufgeschraubt ist. Der Werkzeughalter 30 wird über einen Gewindebolzen 32 in der Aufnahmebohrung 33 des Antriebsteiles 34 gehalten. Zur Halterung ist auf das Ende des Gewindebolzens 32 eine Anschlagmutter 35 aufgeschraubt, an der eine sich an dem Verschlußstopfen 36 abstützende Druckfeder 37 angreift. Mit der Druckfeder wird der Werkzeughalter 30 gegen die Stirnfläche des Antriebsteiles 34 verspannt. Die Mittelachse 15 der Aufnahmebohrung 33 weist gegenüber der Mittelachse 16 des Antriebsteiles 34 die gewünschte Winkelabweichung auf. Die Stirnfläche des Antriebsteiles 34 steht rechtwinklig zur Mittelachse 15 der Aufnahmebohrung 33, so daß auch der Werkzeughalter 30 und damit das Bohrwerkzeug 17 die gleiche Winkelabweichung wie die Aufnahmebohrung aufweisen. Durch am Werkzeughalter 30 angeordnete Zapfen 38, die in entsprechende Aussparungen 39 der Stirnseite des Antriebsteiles 34 eingreifen, wird der Werkzeughalter in Drehrichtung formschlüssig mit dem Antriebsteil 34 verspannt. Durch die Anordnung von beispielsweise vier Vorsprüngen 38 und vier Aussparungen 39 wird eine Viererteilung erreicht, die ein viermaliges Weiterdrehen des Werkzeughalters 30 ermöglicht. Damit können vier Bearbeitungszonen des Werkzeuges genutzt werden. Sollen mehr als vier Bearbeitungszonen in Eingriff gebracht werden, muß die Unterteilung entsprechend erhöht werden.

Eine Wasserzuführung zum Ausspülen des Bohrloches und Kühlen des Bohrkopfes wird dadurch ermöglicht, daß das Antriebsteil 12, 34, Werkzeughalter 14, 30 und Bohrwerkzeug 17 jeweils mit einer zentralen Durchgangsbohrung 40 versehen sind.

## Patentansprüche

1. Vorrichtung zur Herstellung von Bohrlöchern mit Hinterschneidung, insbesondere in Fassadenplatten, aus Keramik, Stein, Beton oder dgl., bestehend aus einem das Bohrwerkzeug (17) aufnehmenden mit einer Bohrmaschine (10) drehmomentübertragend verbundenen Adpater (13), und einer in einer Halterung eines Ständers befestigten Lagerbuchse (7), in der eine mit der Bohrmaschine (10) fest verbundene Führungshülse (8) über ein Schwenklager (7, 9) dreh- und verschwenkbar aufgenommen und gelagert ist, wobei der Adapter (13) aus dem mit der Bohrmaschine (10) drehmomentübertragend verbundenen Antriebsteil (12, 34) und dem das Bohrwerkzeug (17) aufnehmenden Werkzeughalter (14, 30) besteht, wobei die Positionen beider Teile (12, 34, 14, 30) gegeneinander verdrehbar und drehmomentübertragend festsetzbar sind, und die Mittelachse (15) des Werkzeughalters (14, 30) gegenüber der mit der Antriebsachse der Bohrmaschine fluchtenden Mittelachse (16) des Antriebsteiles (12, 34) abgewinkelt ist.

2. Vorrichtung nach Anspruch 1, **dadurch gekennzeichnet**, daß die Winkelabweichung zwischen den Mittelachsen des Werkzeughalters (14, 30) und des Antriebsteiles (12, 34) zwischen 1,5° und 3° beträgt.

3. Vorrichtung nach Anspruch 1, **dadurch gekennzeichnet**, daß der Werkzeughalter (14, 30) in einer die Winkelabweichung fixierenden Aufnahme des Antriebsteiles (12, 34) gehalten und über ein Federelement (28, 37) reib- oder formschlüssig mit dem Antriebsteil verspannt ist.

4. Vorrichtung nach Anspruch 3**, dadurch gekennzeichnet**, daß das Federelement zur reibschlüssigen Verspannung des Werkzeughalters (14) mit dem Antriebsteil (12) eine Tellerfeder (28) ist.

5. Vorrichtung nach Anspruch 3, **dadurch gekennzeichnet**, daß der Werkzeughalter (30) mit dem Antriebsteil (34) formschlüssig über eine Verzahnung (38, 39), Kupplung oder dgl. drehmomentübertragend verspannt ist.

## Claims

1. A device for producing drilled holes with an undercut, especially in facing panels made of ceramics, stone, concrete or similar materials, consisting of an adapter (13) receiving the drilling tool (17) and joined to a drilling machine (10) so as to transfer torque, and a bearing bush (7) secured in a holding means of a supporting stand, in which bearing bush a guide sleeve (8) fixedly joined to the drilling machine (10) is received and mounted so as to rotate and swivel by way of a swivel bearing (7, 9), wherein the adapter (13) consists of the drive part (12, 34) connected to the drilling machine (10) so as to transfer torque, and the tool holder (14, 30) receiving the drilling tool (17), the positions of the two parts (12, 34, 14, 30) being rotatable relative to one another but being fixable for the transfer of torque, and the centre line (15) of the tool holder (14, 30) is angled compared with the centre line (16) of the drive part (12, 34) aligned with the drive axis of the drilling machine.

2. A device according to claim 1, characterized in that the angular offset between the centre lines of the tool holder (14, 30) and the drive part (12, 34) is between 1.5° and 3°.

3. A device according to claim 1, characterized in that the tool holder (14, 30) is held in a mounting of the drive part (12, 34) fixing the angular offset, and is clamped by way of a spring element (28, 37) in a frictional or interlocking fit with the drive part.

4. A device according to claim 3, characterized in that the spring element for frictional clamping of the tool holder (14) with the drive part (12) is a plate spring (28).

5. A device according to claim 3, characterized in that the tool holder (30) is clamped in an interlocking fit with the drive part (34) by way of a toothed configuration (38, 39), coupling or similar configuration so as to transfer torque.

## Revendications

1. Dispositif de perçage pour faire des trous à chambrage, notamment dans des panneaux de parement en céramique, pierre, béton ou panneaux analogues, ce dispositif comportant un adaptateur (13), qui loge l'outil de perçage (17) et qui est relié à une perceuse (10) de manière à en transmettre le couple de rotation, et un coussinet (7) qui est fixé sur un support du bâti, et dans lequel peut pivoter et tourner, par l'entremise d'un coussinet pivotant (7, 9), un manchon de guidage (8) solidaire de la perceuse (10), cet adaptateur (13) étant composé d'un élément d'entraînement (12, 34), qui est relié à la perceuse (10) de manière à en transmettre le couple de rotation, et d'un porte-outil (14, 30) qui loge l'outil de perçage (17), les positions angulaires relatives de ces deux éléments (12, 34 ; 14, 30) pendant leur rotation et la transmission du couple de rotation pouvant être déterminées et l'axe géométrique (15) du porte-outil (14, 30) étant décalé angulairement de l'axe géométrique (16) de l'élément d'entraînement, lequel coïncide avec l'axe d'entraînement de la perceuse.

2. Dispositif selon la revendication 1, caractérisé en ce que le décalage angulaire entre les axes géométriques du porte-outil (14, 30) et de l'élément d'entraînement (12, 34) est compris entre 1,5° et 3°.

3. Dispositif selon la revendication 1, caractérisé en ce que le porte-outil (14, 30) est retenu dans un logement, déterminant le décalage angulaire, de l'élément d'entraînement (12, 34) et est rendu solidaire de celui-ci par friction ou par conformation par l'entremise d'un élément élastique (28, 37) formant ressort.

4. Dispositif selon la revendication 3, caractérisé en ce que l'élément élastique destiné à solidariser par friction le porte-outil (14) et l'élément d'entraînement (12) est une rondelle-ressort (28).

5. Dispositif selon la revendication 3, caractérisé en ce que le porte-outil (34) est solidaire par conformation de l'élément d'entraînement (34) par l'entremise de dents (38, 39), d'un embrayage d'accouplement ou d'un agencement analogue transmettant le couple de rotation.
